# FASCICULE DE BREVET EUROPEEN

(11) **EP 3 310 586 B1**
(45) Date de publication et mention de la délivrance du brevet: **29.04.2020**
(21) Numéro de dépôt: 16734583.4
(22) Date de dépôt: 17.06.2016
(51) Int. Cl.: B60C 1/00, C08L 9/06, C08L 53/02, C08K 3/36, C08K 3/04, C08K 5/548

(54) **PNEUMATIQUE POUR VEHICULES DESTINES A PORTER DE LOURDES CHARGES**
REIFEN FÜR FAHRZEUGE ZUM TRAGEN SCHWERER LASTEN
TYRE FOR VEHICLES INTENDED TO BEAR HEAVY LOADS

(30) Priorité: 18.06.2015 FR 1555573
(43) Date de publication de la demande: 25.04.2018
(73) Titulaire: Compagnie Générale des Etablissements Michelin, 63000 Clermont-Ferrand (FR)
(72) Inventeur: ARAUJO DA SILVA, José Carlos, 63040 Clermont-Ferrand Cedex 9 (FR); LEMERLE, Frédéric, 63040 Clermont-Ferrand Cedex 9 (FR)
(74) Mandataire: Wroblewski, Nicolas Paul André
(86) Numéro de dépôt international: PCT/EP2016/063990
(87) Numéro de publication internationale: WO 2016/202970

(56) Documents cités:
- WO-A1-2015/091922
- WO-A1-2015/091923
- WO-A1-2015/091929
- WO-A1-2015/091933
- WO-A1-2016/001094
- FR-A1- 2 993 816
- DATABASE WPI Week 201442 Thomson Scientific, London, GB; AN 2014-L30180 XP002757355, & KR 2014 0066295 A (HANKOOK TIRE MFG CO LTD) 2 juin 2014 (2014-06-02)

## Description

Le domaine de la présente invention est celui des pneumatiques pour les véhicules destinés à porter de lourdes charges, en particulier les bus, les camions, les véhicules agricoles, les véhicules de génie civil.

Ces pneumatiques sont pourvus de bandes de roulement qui présentent, par rapport aux épaisseurs des bandes de roulement des pneumatiques pour véhicules légers, en particulier pour véhicules tourisme ou camionnette, de grandes épaisseurs de matériau caoutchoutique. Typiquement la partie usante de la bande de roulement d'un poids lourd a une épaisseur d'au moins 15 mm, celle d'un véhicule génie civil d'au moins 30 mm, voire jusqu'à 120 mm.

Au cours du roulage, une bande de roulement subit des sollicitations mécaniques et des agressions résultant du contact direct avec le sol. Dans le cas d'un pneumatique monté sur un véhicule portant de lourdes charges, les sollicitations mécaniques et les agressions subies par le pneumatique se trouvent amplifiées sous l'effet du poids porté par le pneumatique. Ceci a pour conséquence que les amorces de fissure qui se créent dans la bande de roulement sous l'effet de ces sollicitations et de ces agressions, ont tendance à se propager davantage en surface ou à l'intérieur de la bande de roulement. La propagation de fissures dans la bande de roulement peut entrainer un endommagement de la bande de roulement et donc réduire la durée de vie de la bande de roulement ou du pneumatique.

Un pneumatique roulant sur un sol caillouteux est très exposé aux amorces de fissure. La nature même agressive du sol caillouteux exacerbe non seulement ce type d'agression sur la bande de roulement, mais aussi ses conséquences sur la bande de roulement. Ceci est particulièrement vrai pour les pneumatiques équipant les véhicules de génie civil qui évoluent généralement dans des mines. Ceci est également vrai pour les pneus qui sont montés sur les véhicules agricoles en raison du sol caillouteux des terres arables. Les pneumatiques qui équipent des véhicules poids-lourds de chantiers qui circulent autant sur des sols caillouteux que sur des sols bitumineux, connaissent aussi ces mêmes agressions. En raison des deux facteurs aggravants que sont le poids porté par le pneumatique et la nature agressive du sol de roulage, la résistance à la propagation de fissure d'une bande de roulement d'un pneumatique pour un véhicule de génie civil, un véhicule agricole ou un véhicule poids-lourd de chantier s'avère cruciale pour minimiser l'impact des agressions subies par la bande de roulement.

Il est donc important de disposer de pneumatiques pour des véhicules portant de lourdes charges, dont la bande de roulement présente une résistance à la propagation de fissure suffisamment forte pour minimiser l'effet d'une amorce de fissure sur la durée de vie de la bande de roulement. Pour résoudre ce problème, les manufacturiers de pneumatique utilisent par exemple du caoutchouc naturel dans les bandes de roulement en raison des propriétés de résistance à la propagation de fissure du caoutchouc naturel comme mentionné dans « Table 3.7 Comparison of elastomers properties" p. 162-163, Rubber Technology Handbook Hofmann, Hanser publishers (1989).

Les Demanderesses ont découvert que l'utilisation combinée d'un certain taux de silice, d'un polybutadiène ou d'un copolymère de butadiène et d'un certain taux d'un élastomère thermoplastique spécifique dans une bande de roulement permet d'améliorer la résistance à la propagation de fissure de la bande de roulement d'un pneumatique pour véhicule destiné à porter de fortes charges sans détérioration substantielle des autres performances de la bande de roulement que sont l'usure et la résistance au roulement.

Ainsi un premier objet de l'invention est un pneumatique pour véhicules destinés à porter de lourdes charges dont la bande de roulement comprend une composition à base d'au moins une matrice élastomère comprenant au moins un élastomère thermoplastique styrénique qui représente de 10 à 45% en masse de la matrice élastomère, lequel élastomère thermoplastique styrénique comprend au moins un segment rigide styrénique et au moins un segment souple diénique, lequel segment souple diénique comprend au moins 20% en masse d'unités diéniques conjuguées, les unités diéniques conjuguées pouvant être tout ou en partie hydrogénées ; un élastomère diénique choisi dans le groupe constitué par les polybutadiènes, les copolymères de butadiène et leurs mélanges, qui représente plus de 50% de la différence entre la masse de la matrice élastomère et la masse de l'élastomère thermoplastique styrénique ; une charge renforçante comprenant de la silice entre 50% et 99% en masse de la charge renforçante, du noir de carbone, entre 1% et 50%, par exemple entre 2% et 50%, en masse de de la charge renforçante, le taux de charge renforçante variant dans un domaine allant de 20 à 60 pce, par exemple entre 25 à 60 pce ; un agent de couplage et un système de réticulation.

De préférence, l'invention concerne un pneumatique tel que défini ci-dessus dans lequel la charge renforçante comprend entre 60% et 99% de silice et entre 1% et 40% de noir de carbone.

De préférence également, l'invention concerne un pneumatique tel que défini ci-dessus dans lequel le premier élastomère diénique représente au moins 50% en masse de la matrice élastomère.

Préférentiellement, l'invention concerne un pneumatique tel que défini ci-dessus dans lequel la matrice élastomère consiste en un mélange du premier élastomère diénique et de l'élastomère thermoplastique styrénique.

Préférentiellement également, l'invention concerne un pneumatique tel que défini ci-dessus dans lequel le taux d'élastomère thermoplastique styrénique représente de 20 à 45% en masse, encore plus préférentiellement de 25 à 45% en masse de la masse de la matrice élastomère.

De manière préférentielle, l'invention concerne un pneumatique tel que défini ci-dessus dans lequel l'au moins un segment rigide styrénique présente une température de transition vitreuse supérieure à 80°C.

De manière préférentielle également, l'invention concerne un pneumatique tel que défini ci-dessus dans lequel l'au moins un segment rigide styrénique est un polystyrène.

De préférence, l'invention concerne un pneumatique tel que défini ci-dessus dans lequel les unités diéniques conjuguées de l'au moins un segment souple diénique sont des unités 1,3-butadiène ou des unités isoprène.

De préférence également, l'invention concerne un pneumatique tel que défini ci-dessus dans lequel l'élastomère thermoplastique styrénique est un dibloc comportant un seul segment rigide styrénique relié à un seul segment souple diénique. Préférentiellement, l'élastomère thermoplastique styrénique est un copolymère bloc styrène/ butadiène (SB), styrène/ isoprène (SI), styrène/ butadiène/ isoprène (SBI) ou le mélange de ces copolymères.

Alternativement et de préférence également, l'invention concerne un pneumatique tel que défini ci-dessus dans lequel l'élastomère thermoplastique styrénique comprend au moins deux segments rigides styréniques. Préférentiellement, l'élastomère thermoplastique styrénique est un tribloc constitué de deux segments rigides styréniques et d'un segment souple diénique. Plus préférentiellement, l'élastomère thermoplastique styrénique est un copolymère bloc styrène/ butadiène/ styrène (SBS), styrène/ isoprène/ styrène (SIS), styrène/ butadiène/ isoprène/ styrène (SBIS) ou le mélange de ces copolymères.

De préférence, l'invention concerne un pneumatique tel que défini ci-dessus dans lequel une fraction des unités diéniques conjuguées de l'au moins un segment souple diénique est hydrogénée. Préférentiellement, la totalité des unités diéniques conjuguées de l'au moins un segment souple diénique est hydrogénée. De préférence, l'élastomère thermoplastique styrénique est un copolymère bloc styrène/ éthylène/ butylène (SEB), styrène/ éthylène/ propylène (SEP), styrène/ éthylène/ éthylène/ propylène (SEEP) ou leur mélange. De préférence également, l'élastomère thermoplastique styrénique est un copolymère bloc styrène/ éthylène/ butylène/ styrène (SEBS), styrène/ éthylène/ propylène/ styrène (SEPS), styrène/ éthylène/ éthylène/ propylène/ styrène (SEEPS) ou leur mélange.

Préférentiellement, l'invention concerne un pneumatique tel que défini ci-dessus dans lequel l'élastomère thermoplastique styrénique présente une température de transition vitreuse inférieure à -20°C, préférentiellement inférieure à -30°C. Préférentiellement, l'élastomère thermoplastique styrénique présente une température de transition vitreuse inférieure à -40°C, préférentiellement inférieure à -50°C.

De préférence, l'invention concerne un pneumatique tel que défini ci-dessus dans lequel la charge renforçante comprend un noir de carbone ayant une surface spécifique BET préférentiellement d'au moins 90 m²/g, plus préférentiellement d'au moins 100 m²/g. Préférentiellement, le noir de carbone est présent à un taux compris entre 2 et 30 pce, de préférence entre 2 et 24 pce.

De préférence également, l'invention concerne un pneumatique tel que défini ci-dessus dans lequel la silice est présente à un taux compris entre 10 et 59 pce, de préférence entre 12 et 59 pce.

Préférentiellement, le pneumatique tel que défini ci-dessus est un pneumatique hors la route, de préférence pour véhicule de génie civil.

L'invention a aussi pour objet un procédé pour préparer le pneumatique conforme à l'invention, qui comprend les étapes suivantes :
- ajouter au cours d'une première étape dite non productive au premier élastomère diénique, l'élastomère thermoplastique styrénique, la charge renforçante, l'agent de couplage, en malaxant thermomécaniquement jusqu'à atteindre une température maximale comprise entre 130 et 200°C,
- refroidir l'ensemble à une température inférieure à 70°C,
- incorporer ensuite le système de réticulation,
- malaxer le tout jusqu'à une température maximale inférieure à 90°C pour obtenir un mélange,
- puis calandrer ou extruder le mélange obtenu pour former une bande de roulement.

### I. MESURES ET TESTS UTILISES

### Résistance à la propagation de fissure :

La vitesse de fissuration a été mesurée sur des éprouvettes de compositions de caoutchouc, à l'aide d'une machine de fatigue cyclique (*« Elastomer Test System* ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées à l'état neuf. Le test a été conduit à l'air, à une température de 60°C. Après accommodation, 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur inférieure ou égale à environ 500 J/m². La vitesse de propagation de fissure est mesurée en nanomètre par cycle. La résistance à la propagation de fissure sera exprimée en unités relatives (u.r.) en divisant la vitesse de propagation du témoin par celle du mélange, les vitesses étant mesurées au même taux de restitution d'énergie. Une valeur supérieure à celle du témoin, arbitrairement fixée à 100, indique un résultat amélioré c'est-à-dire une résistance supérieure à la propagation de fissures.

### II- DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

La matrice élastomère de la composition de caoutchouc a pour caractéristique essentielle de comprendre un élastomère diénique butadiénique, c'est-à-dire choisi dans le groupe constitué par les polybutadiènes (BR), les copolymères du butadiène et leurs mélanges.

Comme polybutadiènes conviennent notamment ceux ayant un teneur en unités 1,2 comprises entre 4% et 80% en masse de la masse du polybutadiène ou ceux ayant une teneur en liaison 1,4-cis d'au moins 90% en masse de la masse du polybutadiène.

Comme copolymères du butadiène conviennent notamment les copolymères du butadiène et du styrène (SBR). Les copolymères peuvent être préparés en émulsion (ESBR) ou en solution (SSBR). On peut citer les copolymères de butadiène-styrène et en particulier ceux ayant une température de transition vitreuse Tg, mesurée selon ASTM D3418, comprise entre 0°C et - 90°C et plus particulièrement entre - 10°C et - 80°C, une teneur en styrène comprise entre 5% et 60% en poids et plus particulièrement entre 5% et 40%, une teneur (% molaire) en liaisons -1,2 de la partie butadiénique comprise entre 4% et 75% de la partie butadiénique, une teneur (% molaire) en liaisons trans-1,4 comprise entre 10% et 80% de la partie butadiénique.

Ledit élastomère diénique butadiènique, qu'il soit un polybutadiène ou un copolymère du butadiène, peut être modifié par un agent de modification comme par exemple un agent de couplage, d'étoilage ou de fonctionnalisation. On peut citer comme agent de modification les composés comprenant une liaison C-Sn, ou ceux comprenant une fonction amine, silanol ou alcoxysilane. De tels élastomères sont par exemple décrits dans les brevets EP 0 778 311 B1, EP 0 890 607 B1 et EP 0 692 492 B1, EP 1 000 970 B1, EP 1457 501 B1 ou les demandes de brevet WO 2009/000750, WO 2009/133068.

Selon un mode de réalisation préférentiel de l'invention, l'élastomère diénique butadiénique est un polybutadiène, de préférence présentant un taux de liaison 1,4-cis supérieur ou égale à 90% en masse de la masse de polybutadiène. Ce mode de réalisation préférentiel de l'invention peut être combiné à l'un quelconque des modes de réalisation de l'invention.

Selon un mode de réalisation plus préférentiel de l'invention, l'élastomère diénique butadiénique est un copolymère du butadiène et du styrène (SBR). Ce mode de réalisation préférentiel de l'invention peut être combiné à l'un quelconque des modes de réalisation de l'invention.

Ledit élastomère diénique butadiénique représente au moins 50% de la différence entre la masse de la matrice élastomère et la masse de l'élastomère thermoplastique styrénique, ce qui revient à dire que l'élastomère diénique butadiénique présente une fraction pondérale supérieure ou égale à 50% par rapport à la masse totale des élastomères non thermoplastiques de la matrice élastomère. Selon ce mode de réalisation convient par exemple comme matrice élastomère un mélange constitué de 40% en masse de l'élastomère thermoplastique styrénique, de 45% en masse d'élastomère diénique butadiénique et de 15% en masse d'un second élastomère diénique, les pourcentages étant calculés sur la base de la masse totale de la matrice élastomère.

Selon un mode de réalisation de l'invention, l'élastomère diénique butadiénique représente au moins 50% en masse de la matrice élastomère. Selon ce mode de réalisation convient par exemple comme matrice élastomère un mélange constitué de 40% en masse de l'élastomère thermoplastique styrénique, de 55% en masse d'élastomère diénique butadiénique et de 5% en masse d'un second élastomère diénique, les pourcentages étant calculés sur la base de la masse totale de la matrice élastomère.

Par second élastomère (ou indistinctement caoutchouc) diénique, doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non), le second élastomère diénique étant différent du premier élastomère diénique et n'étant pas un élastomère thermoplastique styrénique.

Selon un mode de réalisation préférentiel de l'invention, seuls l'élastomère diénique butadiénique et l'élastomère thermoplastique styrénique constituent la matrice élastomère, ce qui signifie que la matrice élastomère ne contient pas d'autres élastomères.

L'élastomère thermoplastique styrénique comprend au moins un segment rigide styrénique et au moins un segment souple diénique comprenant au moins 20% en masse d'unités diéniques conjuguées, les unités diéniques conjuguées pouvant être tout ou en partie hydrogénées. Les segments rigide et souple peuvent être disposés linéairement, en étoile ou branchés.

Un segment souple se réfère à un bloc polymère de type élastomère, un segment rigide se réfère à un bloc polymère de type thermoplastique.

Selon un mode de réalisation de l'invention, l'élastomère thermoplastique styrénique est un dibloc. Le dibloc comporte un seul segment rigide styrénique relié à un seul segment souple diénique.

Selon un mode de réalisation préférentiel de l'invention, l'élastomère thermoplastique styrénique comprend au moins deux segments rigides styréniques. Selon ce mode de réalisation préférentiel de l'invention, généralement au moins deux extrémités de chaînes de l'élastomère thermoplastique styrénique sont pourvues chacune d'un segment rigide styrénique et les segments rigides styréniques sont reliés par le ou les segments souples diéniques. Selon ce mode de réalisation préférentiel de l'invention, l'élastomère thermoplastique styrénique est de préférence un tribloc. Le tribloc est alors constitué de deux segments rigides styréniques et d'un segment souple diénique.

Dans le cas où l'élastomère thermoplastique styrénique est un dibloc, la dénomination de « l'au moins un segment rigide » désigne le segment rigide présent dans l'élastomère thermoplastique styrénique. Dans les cas différents d'un dibloc, par exemple dans le cas d'un tribloc, la dénomination de « l'au moins un segment rigide » désigne les segments rigides présents dans l'élastomère thermoplastique styrénique.

Dans le cas où l'élastomère thermoplastique styrénique est un dibloc ou un tribloc, la dénomination de « l'au moins un segment souple » désigne le segment souple présent dans l'élastomère thermoplastique styrénique. Dans les cas où l'élastomère thermoplastique styrénique n'est ni un dibloc, ni un tribloc, la dénomination de « l'au moins un segment souple » désigne les segments souples présents dans l'élastomère thermoplastique styrénique.

L'au moins un segment rigide styrénique est l'homopolymère d'un monomère styrénique ou le copolymère bloc ou statistique de plusieurs monomères styréniques ou encore le copolymère d'un ou plusieurs monomères styréniques et d'un autre monomère non styrénique tel qu'un 1,3-diène.

Par monomère styrénique doit être entendu dans la présente description le styrène ou un styrène substitué. Parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, l'au moins un segment rigide styrénique présente une température de transition vitreuse supérieure à 80°C. De préférence, l'au moins un segment rigide styrénique est un polystyrène.

L'au moins un segment souple diénique comprend au moins 20% en masse d'unités monomères diènes conjuguées (appelées aussi unités diéniques conjuguées). L'au moins un segment souple diénique peut être l'homopolymère d'un diène conjugué ou le copolymère statistique ou bloc de plusieurs diènes conjugués ou encore le copolymère d'un ou plusieurs diènes conjugués et d'au moins un autre monomère non diénique tel qu'un monomère styrénique.

Le taux d'unités diéniques conjuguées qui forment le segment souple diénique est préférentiellement d'au moins 50%, plus préférentiellement d'au moins 60%, encore plus préférentiellement d'au moins 70% en masse de la masse du segment souple diénique. Avantageusement il est d'au moins 80% en masse de la masse du segment souple diénique. Ces taux qu'ils soient préférentiels ou non s'appliquent à l'un quelconque des modes de réalisation de l'invention.

A titre d'unités diéniques conjuguées conviennent particulièrement les unités 1,3-butadiène et les unités isoprène. L'au moins un segment souple diénique peut être un polybutadiène, un polyisoprène ou un copolymère de 1,3-butadiène et d'isoprène. Le copolymère de 1,3-butadiène et d'isoprène peut être de nature bloc ou statistique.

Comme élastomère thermoplastique styrénique conviennent les copolymères diblocs tels que les copolymères blocs styrène/ butadiène (SB), styrène/ isoprène (SI), styrène/ butadiène/ isoprène (SBI) ou le mélange de ces copolymères. Dans cette désignation le bloc souple diénique est un copolymère statistique ou bloc.

Comme élastomère thermoplastique styrénique conviennent particulièrement les copolymères tels que les copolymères blocs styrène/ butadiène/ styrène (SBS), styrène/ isoprène/ styrène (SIS), styrène/ butadiène/ isoprène/ styrène (SBIS) ou le mélange de ces copolymères. Dans cette désignation le bloc souple diénique est un copolymère statistique ou bloc. Convient tout particulièrement un copolymère bloc styrène/ butadiène/ isoprène/ styrène (SBIS).

Selon une première variante de l'invention, une fraction des unités diéniques de l'au moins un segment souple diénique est hydrogénée. L'homme du métier comprendra qu'il peut utiliser de manière équivalente un élastomère thermoplastique styrénique dont les doubles liaisons d'une fraction des unités diéniques du segment souple diénique auront été réduites en liaison simple par un procédé autre qu'une hydrogénation. Parmi les procédés qui permettent de réduire les liaisons doubles des unités diéniques en liaison simple, on peut citer les réductions avec un hydrure d'aluminium ou avec la diimine par exemple.

Selon une deuxième variante de l'invention, la totalité des unités diéniques de l'au moins un segment souple diénique est hydrogénée. L'homme du métier comprendra qu'il peut utiliser de manière équivalente un élastomère thermoplastique styrénique dont les doubles liaisons de la totalité des unités diéniques du segment souple diénique auront été réduites en liaison simple par un procédé autre qu'une hydrogénation.

Selon cette deuxième variante de l'invention, conviennent comme élastomère thermoplastique les copolymères blocs styrène/ éthylène/ butylène (SEB), styrène/ éthylène/ propylène (SEP), styrène/ éthylène/ éthylène/ propylène (SEEP) ou les mélanges de ces copolymères. Dans cette désignation le bloc souple diénique hydrogéné est un copolymère statistique ou bloc.

Selon cette deuxième variante de l'invention, conviennent aussi comme élastomère thermoplastique les copolymères blocs styrène/ éthylène/ butylène/ styrène (SEBS), styrène/ éthylène/ propylène/ styrène (SEPS), styrène/ éthylène/ éthylène/ propylène/ styrène (SEEPS) ou les mélanges de ces copolymères. Dans cette désignation le bloc souple diénique hydrogéné est un copolymère statistique ou bloc.

L'un quelconque des modes de réalisation de l'invention s'applique à la première variante de l'invention ou à la deuxième variante de l'invention.

Comme élastomère thermoplastique styrénique conviennent aussi les mélanges d'un copolymère tribloc ci-dessus cité et d'un copolymère dibloc ci-dessus cité. En effet le copolymère tribloc peut contenir une fraction minoritaire pondérale de copolymère dibloc constitué d'un segment rigide styrénique et d'un segment souple diénique, le bloc rigide et le bloc souple étant respectivement de même nature chimique, en particulier de même microstructure, que les blocs rigide et souple du tribloc. La présence de copolymère dibloc dans le copolymère tribloc résulte généralement du procédé de synthèse du copolymère tribloc qui peut conduire à la formation de produit secondaire comme le copolymère dibloc. Le plus souvent le pourcentage de copolymère dibloc dans le copolymère tribloc n'excède pas 40% en masse de copolymère tribloc.

Selon un mode de réalisation préférentiel de l'invention, le taux massique de l'au moins un segment rigide styrénique est compris entre 5 et 40% de la masse de l'élastomère thermoplastique styrénique. En dessous du minimum indiqué, le caractère thermoplastique de l'élastomère thermoplastique styrénique risque de diminuer de manière sensible tandis qu'au-dessus du maximum préconisé, l'élasticité de la composition peut être affectée. Pour ces raisons, le taux massique de l'au moins un segment rigide styrénique dans l'élastomère thermoplastique styrénique est préférentiellement compris dans un domaine allant de 10 à 35%, plus préférentiellement de 10 à 20% de la masse de l'élastomère thermoplastique styrénique. Ces taux qu'ils soient préférentiels ou non s'appliquent à l'un quelconque des modes de réalisation de l'invention, tout particulièrement lorsque le polystyrène forme l'au moins un segment rigide styrénique de l'élastomère thermoplastique styrénique.

La masse molaire moyenne en nombre (notée Mn) de l'élastomère thermoplastique styrénique est préférentiellement comprise entre 50000 et 500 000 g/mol, plus préférentiellement comprise entre 60 000 et 450 000 g/mol, encore plus préférentiellement comprise entre 80 000 et 300 000 g/mol. Avantageusement elle est comprise entre 100 000 et 200 000 g/mol. Ces plages préférentielles de valeurs de masse molaire moyenne en nombre s'appliquent quel que soit le mode de réalisation de l'invention.

La masse molaire est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes en nombre calculées sont relatives à une courbe d'étalonnage réalisée avec des étalons de polystyrène.

L'élastomère thermoplastique styrénique est présent dans une proportion massique d'au plus 50% de la masse de la matrice élastomère de la composition de caoutchouc de la bande de roulement. Au-dessus de la valeur maximum indiquée, il n'y a plus de bénéfice sur la résistance à la propagation de fissure de la composition de caoutchouc formant la bande de roulement d'un pneumatique destiné à porter de lourdes charges. Le taux de l'élastomère thermoplastique styrénique varie dans un domaine allant de 10 à 45%, préférentiellement de 20 à 45% en masse de la masse de la matrice d'élastomère. Avantageusement il varie de 25 à 45% en masse de la masse de la matrice élastomère. Lorsque l'élastomère thermoplastique styrénique est un mélange d'élastomères thermoplastiques styréniques insaturés conformes à l'invention, les taux indiqués s'appliquent au mélange et non à chacun des élastomères thermoplastiques styréniques. Ces taux qu'ils soient préférentiels ou non s'appliquent à l'un quelconque des modes de réalisation de l'invention.

Selon un mode de réalisation particulier de l'invention, l'élastomère thermoplastique styrénique présente une température de transition vitreuse inférieure à -20°C. Cette température de transition vitreuse est généralement attribuée à la température vitreuse du segment souple diénique de l'élastomère thermoplastique styrénique. La température de transition vitreuse est mesurée au moyen d'un calorimètre différentiel ("Differential Scanning Calorimeter") selon la norme ASTM D3418 (1999). Selon ce mode de réalisation particulier de l'invention, l'élastomère thermoplastique styrénique présente une Tg préférentiellement inférieure à -30°C, plus préférentiellement inférieure à -40°C, encore plus préférentiellement inférieure à -50°C.

De manière connue, une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. Une telle charge renforçante peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charges.

Selon la présente invention, la charge renforçante est présente selon une quantité variant de 20 à 60 pce. La charge renforçante comprend de la silice entre 50% et 99% en masse de la charge renforçante et du noir de carbone, entre 1% et 50% en masse de de la charge renforçante. Par « de la silice » on entend une ou plusieurs silices, de même pour le noir de carbone.

De préférence, la charge renforçante comprend entre 60% et 99% de silice et entre 1% et 40% de noir de carbone.

Préférentiellement, le noir de carbone est présent à un taux compris entre 2 et 30 pce, de préférence entre 2 et 24 pce.

Préférentiellement, la silice est présente à un taux compris entre 10 et 59 pce, de préférence entre 12 et 59 pce.

Par silice, doit être entendu ici toute silice capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Comme silice renforçante convient toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. On peut citer comme exemple de silice utile pour les besoins de l'invention la silice « Ultrasil VN3 » commercialisée par la société Evonik. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387. Dans le présent exposé en ce qui concerne la silice, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la silice est indifférent, que ce soit sous forme de poudre, de microperles, de granulés, ou encore de billes.

L'homme du métier comprendra qu'à titre de charge équivalente de la silice renforçante décrite dans le présent paragraphe, pourrait être utilisée une charge renforçante d'une autre nature, notamment organique telle que du noir de carbone, dès lors que cette charge renforçante serait recouverte d'une couche de silice nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Le noir de carbone présente de préférence une surface spécifique BET d'au moins 90 m²/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. De manière préférentielle le noir de carbone présente une BET d'au moins 100 m²/g. Les noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0: 0.1 à 0.3].

Pour coupler la silice à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z - A - Sₓ - A - Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 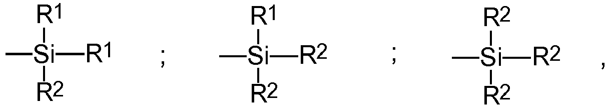
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534.

La teneur en agent de couplage est avantageusement inférieure à 10 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0 et 8 pce, plus préférentiellement compris dans un domaine allant de 0.5 à 7.5 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω -dihydroxy-polyorganosiloxanes (notamment des α,ω-dihydroxy-polydiméthylsiloxanes), des acides gras comme par exemple l'acide stéarique.

La composition de caoutchouc peut comporter également tout ou partie des additifs usuels habituellement utilisés dans les compositions d'élastomères comme par exemple des plastifiants, des pigments, des agents de protection tels que cires anti-ozone, anti-ozonants chimiques, antioxydants, des agents anti-fatigue, un système de réticulation, des accélérateurs ou retardateurs de vulcanisation, des activateurs de vulcanisation. Selon l'un quelconque mode de réalisation de l'invention, le système de réticulation est de préférence à base de soufre, mais il peut être également à base de donneurs de soufre, de peroxyde, de bismaléimides ou de leurs mélanges.

La composition de caoutchouc peut être fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour fabriquer le pneumatique conforme à l'invention comprend par exemple les étapes suivantes :
- ajouter au cours d'une première étape dite non productive au premier élastomère diénique, l'élastomère thermoplastique styrénique, la charge renforçante, l'agent de couplage, en malaxant thermomécaniquement jusqu'à atteindre une température maximale comprise entre 130 et 200°C,
- refroidir l'ensemble à une température inférieure à 70°C,
- incorporer ensuite le système de réticulation,
- malaxer le tout jusqu'à une température maximale inférieure à 90°C pour obtenir un mélange,
- puis calandrer ou extruder le mélange obtenu pour former une bande de roulement.

Quel que soit le mode de réalisation de l'invention, le pneumatique conforme à l'invention est de préférence un pneumatique pour les véhicules hors la route, c'est-à-dire qui roule sur un sol caillouteux, comme par exemple les véhicules de génie civil, les véhicules poids lourds de chantier, ou les véhicules agricoles. Le pneumatique est en particulier un pneumatique pour véhicule de génie civil quel que soit le mode de réalisation de l'invention.

L'invention concerne les pneumatiques précédemment décrits tant à l'état cru (c'est à dire, avant cuisson) qu'à l'état cuit (c'est à dire, après réticulation ou vulcanisation).

### III. EXEMPLES DE REALISATION DE L'INVENTION

Les compositions témoins T1 à T5, non conformes à l'invention, et les compositions A à E, conformes à l'invention, ont été préparées conformément au procédé décrit précédemment. Les formulations de ces compositions sont décrites dans le tableau I.

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, comme bande de roulement de pneumatique.

Les résultats sont consignés dans le tableau II.

**Tableau I**

| | **T1** | **T2** | **T3** | **A** | **T4** | **B** | **T5** | **C** | **D** | **E** | **F** |
|---|---|---|---|---|---|---|---|---|---|---|---|
| **SBR (1)** | 100 | 60 | 100 | 60 | 100 | 60 | 100 | 60 | 60 | 60 | 60 |
| **SBS (2)** | 0 | 40 | 0 | 40 | 0 | 40 | 0 | 40 | 40 | 40 | 40 |
| **Noir de carbone (3)** | 0 | 0 | 8 | 8 | 7 | 7 | 2 | 2 | 3 | 13 | 21 |
| **Silice 1 (4)** | 10 | 10 | 7.5 | 7.5 | 11 | 11 | 11 | 11 | 11 | 11 | 11 |
| **Silice 2 (5)** | 31 | 31 | 24 | 24 | 21 | 21 | 26 | 26 | 26 | 14 | 23 |
| **Silane (6)** | 2.5 | 2.5 | 1.9 | 1.9 | 1.7 | 1.7 | 2.1 | 2.1 | 2.1 | 1.1 | 1.8 |
| **DPG (7)** | 0.5 | 0.5 | 0.5 | 0.5 | 0.5 | 0.5 | 0.5 | 0.5 | 0.5 | 0.5 | 0.5 |
| **Antioxydant (8)** | 2.5 | 2.5 | 2.5 | 2.5 | 2.5 | 2.5 | 2.5 | 2.5 | 2.5 | 2.5 | 2.5 |
| **PEG (9)** | 1.6 | 1.6 | 1.3 | 1.3 | 1.8 | 1.8 | 1.8 | 1.8 | 1.8 | 1.8 | 1.8 |
| **Parrafine** | 1 | 1 | 1 | 1 | 1 | 1 | 1 | 1 | 1 | 1 | 1 |
| **Acide stéarique** | 1 | 1 | 1 | 1 | 1 | 1 | 1 | 1 | 1 | 1 | 1 |
| **ZnO** | 2.7 | 2.7 | 2.7 | 2.7 | 2.7 | 2.7 | 2.7 | 2.7 | 2.7 | 2.7 | 2.7 |
| **CBS (10)** | 1.1 | 1.1 | 1.1 | 1.1 | 1.1 | 1.1 | 1.1 | 1.1 | 1.1 | 1.1 | 1.1 |
| **Soufre** | 1.7 | 1.7 | 1.7 | 1.7 | 1.7 | 1.7 | 1.7 | 1.7 | 1.7 | 1.7 | 1.7 |

| | | | | | | | | | | | |
|---|---|---|---|---|---|---|---|---|---|---|---|
| (1) SBR couplé Sn avec 15,5% de styrène (% en masse relatif à la masse de SBR) et 24% de motifs butadiène 1,2 (% en masse de la partie butadiénique) de Tg -65°C (2) SBS « D1153 » commercialisé par Kraton (3) Noir de carbone N115 (4) Silice « Ultrasil VN3 » commercialisé par Evonik (5) Silice « Zeosil 160MP » commercialisée par Rhodia (6) Bis(3-triethoxysilylpropyl) tetrasulfan type Si69, commercialisé par Degussa (7) Diphénylguanidine « Perkacit DPG » de la société Flexsys (8) N-(1,3-diméthylbutyl)-N'-phényl-p-phénylènediamine, de la société Flexsys (9) Polyéthylène glycol de Mn 6000-20000 g/mol de Sasol Marl (10) N-cyclohexyl-2-benzothiazol-sulfénamide, « Santocure CBS », commercialisé par Flexsys | | | | | | | | | | | |

**Tableau II**

| | **T1** | **T2** | **T3** | **A** | **T4** | **B** | **T5** | **C** | **D** | **E** | **F** |
|---|---|---|---|---|---|---|---|---|---|---|---|
| **Résistance à la propagation de fissure à 60°C** | 100 | 69 | 48 | 107 | 529 | 1941 | 370 | 9983 | 6353 | 1075 | 23294 |

Les résultats montrent une très forte amélioration de la résistance à la propagation de fissure pour A, B, C, D, E et F comparativement à leur témoin respectif.

L'invention permet d'améliorer significativement la durée de vie de pneumatiques portant de lourdes charges, notamment circulant hors la route, tels que des pneumatiques équipant des véhicules de poids lourds, en particulier des véhicules agricoles, des véhicules de génie civil et des véhicules poids-lourds de chantier, puisque ces pneumatiques deviennent beaucoup moins sensibles à la propagation de fissure au niveau de leur bande de roulement.

## Revendications

1. Pneumatique pour véhicules destinés à porter de lourdes charges dont la bande de roulement comprend une composition à base d'au moins :
- une matrice élastomère comprenant :
∘ un élastomère thermoplastique styrénique qui représente de 10 à 45% en masse de la matrice élastomère, lequel élastomère thermoplastique styrénique comprend au moins un segment rigide styrénique et au moins un segment souple diénique, lequel l'au moins un segment souple diénique comprend au moins 20% en masse d'unités diéniques conjuguées, les unités diéniques conjuguées pouvant être tout ou en partie hydrogénées,
∘ un élastomère diénique choisi dans le groupe constitué par les polybutadiènes, les copolymères de butadiène et leurs mélanges, qui représente plus de 50% de la différence entre la masse de la matrice élastomère et la masse de l'élastomère thermoplastique styrénique,
- une charge renforçante comprenant
∘ de la silice entre 50% et 99% en masse de la charge renforçante,
∘ du noir de carbone, entre 1% et 50% en masse de de la charge renforçante,
∘ le taux de charge renforçante variant dans un domaine allant de 20 à 60 pce,
- un agent de couplage,
- un système de réticulation.

2. Pneumatique selon la revendication 1, dans lequel le premier élastomère diénique représente au moins 50% en masse de la matrice élastomère.

3. Pneumatique selon la revendication 1 ou 2, dans lequel la matrice élastomère consiste en un mélange du premier élastomère diénique et de l'élastomère thermoplastique styrénique.

4. Pneumatique selon l'une quelconque des revendications 1 à 3, dans lequel le taux d'élastomère thermoplastique styrénique représente de 20 à 45% en masse, préférentiellement de 25 à 45% en masse de la masse de la matrice élastomère.

5. Pneumatique selon l'une quelconque des revendications 1 à 4, dans lequel l'au moins un segment rigide styrénique est un polystyrène.

6. Pneumatique selon l'une quelconque des revendications 1 à 5, dans lequel les unités diéniques conjuguées de l'au moins un segment souple diénique sont des unités 1,3-butadiène ou des unités isoprène.

7. Pneumatique selon l'une quelconque des revendications 1 à 6, dans lequel l'élastomère thermoplastique styrénique est un dibloc comportant un seul segment rigide styrénique relié à un seul segment souple diénique.

8. Pneumatique selon la revendication 7, dans lequel l'élastomère thermoplastique styrénique est un copolymère bloc styrène/ butadiène (SB), styrène/ isoprène (SI), styrène/ butadiène/ isoprène (SBI) ou le mélange de ces copolymères.

9. Pneumatique selon l'une quelconque des revendications 1 à 6, dans lequel l'élastomère thermoplastique styrénique comprend au moins deux segments rigides styréniques.

10. Pneumatique selon la revendication 9, dans lequel l'élastomère thermoplastique styrénique est un tribloc constitué de deux segments rigides styréniques et d'un segment souple diénique.

11. Pneumatique selon la revendication 10, dans lequel l'élastomère thermoplastique styrénique est un copolymère bloc styrène/ butadiène/ styrène (SBS), styrène/ isoprène/ styrène (SIS), styrène/ butadiène/ isoprène/ styrène (SBIS) ou le mélange de ces copolymères.

12. Pneumatique selon l'une quelconque des revendications 1 à 11, dans lequel une fraction des unités diéniques conjuguées de l'au moins un segment souple diénique est hydrogénée.

13. Pneumatique selon l'une quelconque des revendications 1 à 11, dans lequel la totalité des unités diéniques conjuguées de l'au moins un segment souple diénique est hydrogénée.

14. Pneumatique selon les revendications 7 et 13, dans lequel l'élastomère thermoplastique styrénique est un copolymère bloc styrène/ éthylène/ butylène (SEB), styrène/ éthylène/ propylène (SEP), styrène/ éthylène/ éthylène/ propylène (SEEP) ou leur mélange.

15. Pneumatique selon les revendications 10 et 13, dans lequel l'élastomère thermoplastique styrénique est un copolymère bloc styrène/ éthylène/ butylène/ styrène (SEBS), styrène/ éthylène/ propylène/ styrène (SEPS), styrène/ éthylène/ éthylène/ propylène/ styrène (SEEPS) ou leur mélange.

16. Pneumatique selon l'une quelconque des revendications 1 à 15, dans lequel l'élastomère thermoplastique styrénique présente une température de transition vitreuse inférieure à -20°C, préférentiellement inférieure à -30°C.

17. Pneumatique selon l'une quelconque des revendications 1 à 16, dans lequel la charge renforçante comprend un noir de carbone ayant une surface spécifique BET préférentiellement d'au moins 90 m2/g, plus préférentiellement d'au moins 100 m2/g.

18. Pneumatique selon l'une quelconque des revendications 1 à 17, dans lequel le pneumatique est un pneumatique hors la route, de préférence pour véhicule de génie civil.

## Patentansprüche

1. Reifen für Fahrzeuge zum Tragen von schweren Lasten, dessen Lauffläche eine Zusammensetzung auf Basis von mindestens
- einer Elastomermatrix, umfassend:
∘ ein thermoplastisches Styrolelastomer, das 10 bis 45 Massen-% der Elastomermatrix ausmacht, wobei das thermoplastische Styrolelastomer mindestens ein Styrol-Hartsegment und mindestens ein Dien-Weichsegment umfasst, wobei das mindestens eine Dien-Weichsegment mindestens 20 Massen-% konjugierte Dieneinheiten umfasst, wobei die konjugierten Dieneinheiten ganz oder teilweise hydriert sind,
∘ ein Dienelastomer aus der Gruppe bestehend aus Polybutadienen, Butadien-Copolymeren und Mischungen davon, das mehr als 50 % der Differenz zwischen der Masse der Elastomermatrix und der Masse des thermoplastischen Styrolelastomers ausmacht,
- einem verstärkenden Füllstoff, umfassend
∘ Kieselsäure in einem Anteil zwischen 50 und 99 Massen-% des verstärkenden Füllstoffs,
∘ Ruß in einem Anteil zwischen 1 und 50 Massen-% des verstärkenden Füllstoffs,
∘ wobei der Gehalt an verstärkendem Füllstoff in einem Bereich von 20 bis 60 phe variiert,
- einem Kupplungsmittel,
- einem Vernetzungssystem
umfasst.

2. Reifen nach Anspruch 1, wobei das erste Dienelastomer mindestens 50 Massen-% der Elastomermatrix ausmacht.

3. Reifen nach Anspruch 1 oder 2, wobei die Elastomermatrix aus einer Mischung des ersten Dienelastomers und des thermoplastischen Styrolelastomers besteht.

4. Reifen nach einem der Ansprüche 1 bis 3, wobei der Gehalt an thermoplastischem Styrolelastomer 20 bis 45 Massen-%, bevorzugt 25 bis 45 Massen-%, der Masse der Elastomermatrix ausmacht.

5. Reifen nach einem der Ansprüche 1 bis 4, wobei es sich bei mindestens einem Styrol-Hartsegment um ein Polystyrol handelt.

6. Reifen nach einem der Ansprüche 1 bis 5, wobei es sich bei den konjugierten Dieneinheiten des mindestens einen Dien-Weichsegments um 1,3-Butadien-Einheiten oder Isopren-Einheiten handelt.

7. Reifen nach einem der Ansprüche 1 bis 6, wobei es sich bei dem thermoplastischen Styrolelastomer um einen Diblock mit einem einzigen Styrol-Hartsegment, das an ein einziges Dien-Weichsegment gebunden ist, handelt.

8. Reifen nach Anspruch 7, wobei es sich bei dem thermoplastischen Styrolelastomer um ein Styrol/Butadien(SB)-Blockcopolymer, Styrol/Isopren(SI)-Blockcopolymer, Styrol/Butadien/Isopren(SBI)-Blockcopolymer oder die Mischung dieser Copolymere handelt.

9. Reifen nach einem der Ansprüche 1 bis 6, wobei das thermoplastische Styrolelastomer mindestens zwei Styrol-Hartsegmente umfasst.

10. Reifen nach Anspruch 9, wobei es sich bei dem thermoplastischen Styrolelastomer um einen Triblock, der aus zwei Styrol-Hartsegmenten und einem Dien-Weichsegment besteht, handelt.

11. Reifen nach Anspruch 10, wobei es sich bei dem thermoplastischen Styrolelastomer um ein Styrol/Butadien/Styrol(SBS)-Blockcopolymer, Styrol/Isopren/Styrol(SIS)-Blockcopolymer, Styrol/Butadien/Isopren/Styrol(SIBS)-Blockcopolymer oder die Mischung dieser Copolymere handelt.

12. Reifen nach einem der Ansprüche 1 bis 11, wobei ein Teil der konjugierten Dieneinheiten des mindestens einen Dien-Weichsegments hydriert ist.

13. Reifen nach einem der Ansprüche 1 bis 11, wobei alle konjugierten Dieneinheiten des mindestens einen Dien-Weichsegments hydriert sind.

14. Reifen nach den Ansprüchen 7 und 13, wobei es sich bei dem thermoplastischen Styrolelastomer um ein Styrol/Ethylen/Butylen(SEB)-Blockcopolymer, Styrol/Ethylen/Propylen(SEP)-Blockcopolymer, Styrol/Ethylen/Ethylen/Propylen(SEEP)-Blockcopolymer oder eine Mischung davon handelt.

15. Reifen nach den Ansprüchen 10 und 13, wobei es sich bei dem thermoplastischen Styrolelastomer um ein Styrol/Ethylen/Butylen/Styrol(SEBS)-Blockcopolymer, Styrol/Ethylen/Propylen/Styrol(SEPS)-Blockcopolymer, Styrol/Ethylen/Ethylen/Propylen/Styrol(SEEPS)-Blockcopolymer oder eine Mischung davon handelt.

16. Reifen nach einem der Ansprüche 1 bis 15, wobei das thermoplastische Styrolelastomer eine Glasübergangstemperatur von weniger als -20 °C, bevorzugt weniger als -30 °C, aufweist.

17. Reifen nach einem der Ansprüche 1 bis 16, wobei der verstärkende Füllstoff einen Ruß mit einer spezifischen BET-Oberfläche, die bevorzugt mindestens 90 m²/g, weiter bevorzugt mindestens 100 m²/g, beträgt, umfasst.

18. Reifen nach einem der Ansprüche 1 bis 17, wobei es sich bei dem Reifen um einen Geländereifen, vorzugsweise für ein Baufahrzeug, handelt.

## Claims

1. Tyre for vehicles which are intended to bear heavy loads, the tread of which comprises a composition based on at least:
- an elastomer matrix comprising:
∘ a thermoplastic styrene elastomer which represents from 10 to 45% by weight of the elastomer matrix, which thermoplastic styrene elastomer comprises at least one rigid styrene segment and at least one flexible diene segment, which at least one flexible diene segment comprises at least 20% by weight of conjugated diene units, it being possible for the conjugated diene units to be all or in part hydrogenated,
∘ a diene elastomer selected from the group consisting of polybutadienes, butadiene copolymers and mixtures thereof, which represents more than 50% of the difference between the weight of the elastomer matrix and the weight of the thermoplastic styrene elastomer,
- a reinforcing filler comprising
∘ silica, between 50% and 99% by weight of the reinforcing filler,
∘ carbon black, between 1% and 50% by weight of the reinforcing filler,
∘ the content of reinforcing filler varying within a range extending from 20 to 60 phr,
- a coupling agent,
- a crosslinking system.

2. Tyre according to Claims 1, wherein the first diene elastomer represents at least 50% by weight of the elastomer matrix.

3. Tyre according to either Claims 1 or 2, wherein the elastomer matrix consists of a mixture of the first diene elastomer and of the thermoplastic styrene elastomer.

4. Tyre according to any one of Claims 1 to 3, wherein the content of thermoplastic styrene elastomer represents from 20 to 45% by weight and more preferentially still from 25 to 45% by weight of the elastomer matrix.

5. Tyre according to any one of Claims 1 to 4, wherein the at least one rigid styrene segment is a polystyrene.

6. Tyre according to any one of Claims 1 to 5, wherein the conjugated diene units of the at least one flexible diene segment are 1,3-butadiene units or isoprene units.

7. Tyre according to any one of Claims 1 to 6, wherein the thermoplastic styrene elastomer is a diblock comprising just one rigid styrene segment connected to just one flexible diene segment.

8. Tyre according to Claim 7, wherein the thermoplastic styrene elastomer is a styrene/butadiene (SB), styrene/isoprene (SI) or styrene/butadiene/isoprene (SBI) block copolymer or the mixture of these copolymers.

9. Tyre according to any one of Claims 1 to 6, wherein the thermoplastic styrene elastomer comprises at least two rigid styrene segments.

10. Tyre according to Claim 9, wherein the thermoplastic styrene elastomer is a triblock composed of two rigid styrene segments and of a flexible diene segment.

11. Tyre according to Claim 10, wherein the thermoplastic styrene elastomer is a styrene/butadiene/styrene (SBS), styrene/isoprene/styrene (SIS) or styrene/butadiene/isoprene/styrene (SBIS) block copolymer or the mixture of these copolymers.

12. Tyre according to any one of Claims 1 to 11, wherein a fraction of the conjugated diene units of the at least one flexible diene segment is hydrogenated.

13. Tyre according to any one of Claims 1 to 11, wherein all of the conjugated diene units of the at least one flexible diene segment are hydrogenated.

14. Tyre according to Claims 7 and 13, wherein the thermoplastic styrene elastomer is a styrene/ethylene/butylene (SEB), styrene/ethylene/propylene (SEP) or styrene/ethylene/ethylene/propylene (SEEP) block copolymer or their mixture.

15. Tyre according to Claims 10 and 13, wherein the thermoplastic styrene elastomer is a styrene/ethylene/butylene/styrene (SEBS), styrene/ethylene/propylene/styrene (SEPS) or styrene/ethylene/ethylene/propylene/styrene (SEEPS) block copolymer or their mixture.

16. Tyre according to any one of Claims 1 to 15, wherein the thermoplastic styrene elastomer has a glass transition temperature of less than -20°C, preferentially of less than -30°C.

17. Tyre according to any one of Claims 1 to 16, wherein the reinforcing filler comprises a carbon black having a BET specific surface area preferentially of at least 90 m²/g, more preferentially of at least 100 m²/g.

18. Tyre according to any one of Claims 1 to 17, wherein the tyre is an off-road tyre, preferably for a civil engineering vehicle.
